# EUROPÄISCHE PATENTSCHRIFT

(11) **EP 4 231 177 B1**
(45) Veröffentlichungstag und Bekanntmachung des Hinweises auf die Patenterteilung: **01.07.2026**
(21) Anmeldenummer: 22156992.4
(22) Anmeldetag: 16.02.2022
(51) Int. Cl.: G06F 21/32

(54) **SCHÜTZENDES BETRIEBSVERFAHREN FÜR EIN SPRACHGESTEUERTES ENDGERÄT**
PROTECTIVE OPERATING METHOD FOR A VOICE-CONTROLLED TERMINAL
PROCÉDÉ DE FONCTIONNEMENT DE PROTECTION POUR UN TERMINAL À COMMANDE VOCALE

(43) Veröffentlichungstag der Anmeldung: 23.08.2023
(73) Patentinhaber: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(56) Entgegenhaltungen:
- WO-A1-2019/199288
- US-A1- 2017 358 317
- US-A1- 2019 295 547
- US-A1- 2019 311 722

## Beschreibung

Die Erfindung betrifft ein Verfahren zum Betreiben eines Endgeräts, bei dem ein Endgerät eine sprachliche Äußerung einer in einer Umgebung des Endgeräts angeordneten Person erfasst und eine die sprachliche Äußerung umfassende Audiodatei bereitstellt. Ferner betrifft die Erfindung ein Computerprogrammprodukt.

Verfahren der eingangs genannten Art gehören in unterschiedlichen Ausgestaltungen zum Stand der Technik und dienen dazu, ein Endgerät mittels einer sprachlichen Äußerung, beispielsweise einer Frage oder einem Befehl, zu steuern. Die Frage kann eine Wetterauskunft anfordern, der Befehl kann ein Abspielen eines ausgewählten Unterhaltungsinhalts starten. Das Endgerät wird aufgrund der Steuerbarkeit durch die sprachliche Äußerung genauer als ein sprachgesteuertes Endgerät bezeichnet. Im Rahmen der Beschreibung wird allerdings gleichbedeutend die kurze Bezeichnung verwendet.

Das Endgerät umfasst zum Erfassen eines Schalls einen Schallsensor, d.h. ein Mikrofon. Der Schall kann eine sprachliche Äußerung einer in einer Umgebung des Endgeräts angeordneten Person umfassen. Die Umgebung ist durch eine Empfindlichkeit des Schallsensors definiert.

Das Endgerät kann der in der Umgebung angeordneten Person zugeordnet sein, d.h. für eine Nutzung durch die in der Umgebung angeordneten Person vorgesehen sein. In diesem Fall wird die Person auch als ein Nutzer des Endgeräts, kurz als ein Nutzer, bezeichnet. In der Umgebung können aber von dem Nutzer verschiedene weitere Personen angeordnet sein, welchen das Endgerät nicht zugeordnet ist. Jede weitere Person kann ebenfalls sprachliche Äußerungen bereitstellen, welche von dem Endgerät erfasst werden.

US 2019/0295547 A1 offenbart ein Verfahren zum Betreiben eines Endgeräts, bei dem zu einer häuslichen Einheit gehörende Personen mittels des Endgeräts durch sprachliche Äußerungen ein zu der häuslichen Einheit gehörendes IoT (Internet of Things)-Gerät steuern. Für weitere nicht zu der häuslichen Einheit gehörende Personen kann ein Gastzugang definiert werden, um auch ihnen ein Steuern des loT-Geräts zu erlauben.

Es ist aber im Allgemeinen unerwünscht, dass auch eine - unbefugte - weitere Person das Endgerät mittels einer sprachlichen Äußerung steuert. Abgesehen davon kann jede - unbeteiligte - weitere Person einen insbesondere gesetzlich geregelten Anspruch darauf haben, dass eine von dem Endgerät erfasste sprachliche Äußerung der weiteren Person nicht verarbeitet wird, d.h. die weitere Person nicht ausgehorcht wird. Oder die weitere Person hat zumindest ein berechtigtes Interesse an einer Kenntnis davon oder an einer Kontrolle darüber, ob und auf welche Weise sprachliche Äußerungen der weiteren Person verarbeitet wurden bzw. werden. Letzteres ist allerdings in der Regel dank technischen Mitteln dem Nutzer vorbehalten.

Ein lediglich beispielhaftes Szenario betrifft eine weitere Person, welche den Nutzer in einer Wohnung des Nutzers als ein Gast besucht, wobei in der Wohnung das Endgerät angeordnet ist und durchgehend betrieben wird. Weder soll der Gast während des Besuchs das Endgerät steuern, noch will der Gast während des Besuchs von dem Endgerät unkontrolliert ausgehorcht werden.

Es ist daher eine Aufgabe der Erfindung, ein Verfahren zum Betreiben eines sprachgesteuerten Endgeräts vorzuschlagen, welches das Endgerät vor einem Steuern durch Unbefugte und/oder Unbeteiligte vor einem unbemerkten und unkontrollierbaren Aushorchen durch das Endgerät schützt. Eine weitere Aufgabe der Erfindung ist, ein Computerprogrammprodukt bereitzustellen.

Ein Gegenstand der Erfindung ist ein Verfahren zum Betreiben eines Endgeräts, bei dem ein Endgerät eine sprachliche Äußerung einer in einer Umgebung des Endgeräts angeordneten Person erfasst und eine die sprachliche Äußerung umfassende Audiodatei bereitstellt. Das Endgerät erfasst, insbesondere durchgehend, einen von der Umgebung bereitgestellten Schall, welcher die sprachliche Äußerung der Person enthalten kann. Die sprachliche Äußerung umfasst allgemein eine natürliche Sprache der Person. Das Endgerät kann die Audiodatei in einem an sich bekannten Format bereitstellen, beispielsweise WAV, OGG, MP3 und dergleichen. Das Erfassen der sprachlichen Äußerung und das Bereitstellen der Audiodatei sind Schritte des Betriebsverfahrens, welche von dem Endgerät lokal ausgeführt werden.

Erfindungsgemäß speichert eine zentrale Stimmprofildatenbank eine Mehrzahl von Stimmprofilen und stellt die zentrale Stimmprofildatenbank die gespeicherten Stimmprofile bereit, vergleicht eine dem Endgerät zugeordnete Schutzentität einen bestimmten Abschnitt der bereitgestellten Audiodatei mit jedem von einer zentralen Stimmprofildatenbank bereitgestellten Stimmprofil, und verwirft die Schutzentität den verglichenen Abschnitt, wenn der verglichene Abschnitt zu keinem bereitgestellten Stimmprofil passt oder einem passenden bereitgestellten Stimmprofil keine Verarbeitungserlaubnis zugeordnet ist. Die Schutzentität kann als ein Softwaremodul ausgebildet sein, welches lokal in dem Endgerät installiert ist und/oder ausgeführt wird oder in einem zentralen Netzwerkknoten, beispielsweise einer Internet-Cloud, installiert ist und/oder ausgeführt wird.

Die Audiodatei besteht aus einem Abschnitt oder umfasst einen Abschnitt oder mehrere Abschnitte. Jeder Abschnitt der Audiodatei muss vor einer Verarbeitung die Schutzentität passieren, welche als ein Wächter oder Türsteher fungiert. Die Schutzidentität kooperiert mit der zentralen Stimmprofildatenbank, welche eine Mehrzahl von Stimmprofilen umfasst, welchen jeweils eine oder mehrere Verarbeitungserlaubnisse zugeordnet sind. Jedes von der Stimmprofildatenbank gespeicherte Stimmprofil und jede dem gespeicherten Stimmprofil zugeordnete Verarbeitungserlaubnis wurden von einer Person vorab registriert.

Jede nachfolgende Verarbeitung des Abschnitts der Audiodatei setzt zwingend voraus, dass die in der Umgebung angeordnete Person ihr Stimmprofil und insbesondere eine die nachfolgende Verarbeitung angebende Verarbeitungserlaubnis in der Stimmprofildatenbank registriert. Entsprechend muss sowohl ein Nutzer des Endgeräts als auch jede von dem Nutzer verschiedene weitere Person ihr Stimmprofil und insbesondere jede gewünschte Verarbeitungserlaubnis in der Stimmprofildatenbank registrieren. Infolgedessen ist ein unbefugtes Steuern des Endgeräts ausgeschlossen.

Ohne das vorherige Registrieren des Stimmprofils ist die nachfolgende Verarbeitung des Abschnitts der Audiodatei ausgeschlossen. Das erfindungsgemäße Betriebsverfahren implementiert somit ein Opt-In-Prinzip, d.h. das Verfahren zum Betreiben eines Endgeräts beruht auf einer vorherigen Zustimmung, d.h. Genehmigung, der Person zu einer Verarbeitung.

Das Verwerfen kann ein unmittelbares Löschen des verglichenen Abschnitts und/oder der bereitgestellten Audiodatei umfassen. Der verglichene Abschnitt bzw. die bereitgestellte Audiodatei werden gelöscht, wodurch jedes Verarbeiten des Abschnitts ausgeschlossen ist.

Weiterhin erfindungsgemäß übergibt die Schutzentität den verglichenen Abschnitt einer Verarbeitungsentität und verarbeitet die Verarbeitungsentität den übergebenen Abschnitt, wenn der verglichene Abschnitt zu einem bereitgestellten Stimmprofil passt und dem passenden bereitgestellten Stimmprofil eine zu der Verarbeitungsentität passende Verarbeitungserlaubnis zugeordnet ist. Die Verarbeitungsentität kann als ein Softwaremodul ausgebildet sein, welches lokal in dem Endgerät installiert ist und/oder ausgeführt wird oder in einem zentralen Netzwerkknoten, beispielsweise einer Internet-Cloud, installiert ist/und oder ausgeführt wird.

Nur wenn die Person gemäß dem Opt-In-Prinzip die Verarbeitungserlaubnis registriert hat, d.h. die Verarbeitung genehmigt hat, verarbeitet die Verarbeitungsentität den übergebenen Abschnitt. Infolgedessen ist einer unbeteiligten Person eine Kontrolle über eine Verarbeitung ihrer sprachlichen Äußerungen ermöglicht.

In weiteren Ausführungsformen umfasst das Verarbeiten des übergebenen Abschnitts ein Speichern des übergebenen Abschnitts und/oder ein Transkribieren des übergebenen Abschnitts. Der übergebene Abschnitt kann für eine spätere Verwendung gespeichert werden oder für eine Textverarbeitung transkribiert werden, d.h. mittels eines NLU (Natural Language Understanding)-Moduls in Buchstaben- und Wortfolgen gewandelt werden.

Weiterhin erfindungsgemäß übergibt die Schutzentität den verglichenen Abschnitt an einen Sprachassistenten als die Verarbeitungsentität. Der verglichene Abschnitt kann ein Aufweckwort, welches den Sprachassistenten aufwecken soll, eine Frage, welche der Sprachassistent beantworten soll, oder einen Befehl, welchen der Sprachassistent ausführen soll. Sprachassistenten sind natürlichsprachliche Mensch-Maschine-Schnittstellen (Human Machine Interface, HMI).

Vorteilhaft sichert ein Smart Contract das in der Stimmprofildatenbank gespeicherte Stimmprofil ab und ordnet der Smart Contract dem in der Stimmprofildatenbank gespeicherten Stimmprofil die Verarbeitungserlaubnis zu. Der Smart Contract kann in einer Blockchain gespeichert sein und erhöht eine Sicherheit des Betriebsverfahrens gegenüber einem Missbrauch.

Der Smart Contract oder eine Mehrzahl von Smart Contracts kann dem Stimmprofil insbesondere eine Mehrzahl von Verarbeitungserlaubnissen zuordnen. Ein einziger Smart Contract kann dem Stimmprofil die Mehrzahl von Stimmprofilen zuordnen. Ebenso kann jede Verarbeitungserlaubnis von einem eigenen separaten Smart Contract zugeordnet werden. In dem letztgenannten Fall können die Verarbeitungserlaubnisse unterschiedlich geregelt sein, erfordern aber einen hohen Verwaltungsaufwand der Person. In dem erstgenannten Fall sind die Verarbeitungserlaubnisse einheitlich geregelt, erlauben aber einen niedrigen Verwaltungsaufwand der Person.

Die Verarbeitungsentität verarbeitet den übergebenen Abschnitt vorteilhaft dann und nur dann, wenn die Person die Verarbeitungsentität und/oder das Verarbeiten mittels eines Tokens des Smart Contracts autorisiert. Das Token, welches dem Smart Contract zugeordnet ist, erhöht weiter die Sicherheit gegenüber einem Missbrauch.

Günstigerweise kann die Verarbeitungsentität den übergebenen Abschnitt ausschließlich während einer Gültigkeitsdauer des Tokens verarbeiten. Die Gültigkeitsdauer ermöglicht von vornherein eine zeitliche Beschränkung der Verarbeitungserlaubnis. Die Gültigkeitsdauer ist beispielsweise für eine einmalige Auskunftsanfrage der Person nach einer Verarbeitung ihrer sprachlichen Äußerungen nützlich.

In einer weiteren Ausführungsform erfasst das Endgerät sprachliche Äußerungen von einer Mehrzahl von in der Umgebung des Endgeräts angeordneten Personen und stellt das Endgerät eine die sprachlichen Äußerungen der mehreren Personen umfassende Audiodatei bereit, bestimmt die Schutzentität für jede mittels eines Filtermoduls isolierbare sprachliche Äußerung einer Person einen Abschnitt separat und vergleicht die Schutzentität jeden bestimmten Abschnitt mit jedem von der zentralen Stimmprofildatenbank bereitgestellten Stimmprofil. Mittels des Filtermoduls bestimmt die Schutzentität eine Mehrzahl von Abschnitten der Audiodatei, welche jeweils eine sprachliche Äußerung von ausschließlich einer Person umfassen. Ebenso können mittels des Filtermoduls Abschnitte der Audiodatei bestimmt werden, welche jeweils gleichzeitige sprachliche Äußerungen von zwei Personen oder mehr als zwei Personen umfassen. Auf diese Weise behandelt die Schutzentität verschiedene Abschnitte der Audiodatei unterschiedlich, wodurch ein Nutzen des Verfahrens erhöht ist.

In einer Ausführungsform verwirft die Schutzentität die bereitgestellte Audiodatei, wenn ein verglichener Abschnitt zu keinem bereitgestellten Stimmprofil passt oder die bereitgestellte Audiodatei eine nicht isolierbare sprachliche Äußerung einer Person umfasst. Mit anderen Worten wird die bereitgestellte Audiodatei nur dann nicht verworfen, wenn zumindest ein verglichener Abschnitt zu einem bereitgestellten Stimmprofil passt und wenn die Audiodatei keine gleichzeitigen sprachlichen Äußerungen verschiedener Personen umfasst. Abschnittsweise Mängel der Audiodatei bewirken ein Verwerfen der Audiodatei. Auf diese Weise wird die Sicherheit des Betriebsverfahrens weiter erhöht.

Vorteilhaft ermittelt die Schutzentität Metadaten des bestimmten Abschnitts und vergleicht den bestimmten Abschnitt ausschließlich mit von der zentralen Stimmprofildatenbank bereitgestellten Stimmprofilen, welchen mit den ermittelten Metadaten kompatible Metadaten zugeordnet sind. Jedes Vergleichen des Abschnitts mit einem bereitgestellten Stimmprofil verursacht einen hohen Rechenaufwand. Die Zahl der Vergleiche wird verringert, indem mittels der Metadaten so viele bereitgestellte Stimmprofile von dem Vergleichen ausgeschlossen werden, dass die zum Vergleichen verbleibenden Stimmprofile mit einem akzeptablen Rechenaufwand verglichen werden können.

Die Verarbeitungsentität kann die übergebene Audiodatei zusammen mit den zu Abschnitten der Audiodatei passenden Stimmprofilen speichern und für eine Auskunftsanfrage bereitstellen. Eine von der Person gestellte Auskunftsanfrage nach einer Verarbeitung ihrer sprachlichen Äußerungen beruht auf dem registrierten Stimmprofil der Person. Die mit den Abschnitten der Audiodatei gespeicherten Stimmprofile, beispielsweise den Abschnitten zugeordnete Zeiger in die Stimmprofildatenbank, ermöglichen ein einfaches Ermitteln, ob eine sprachliche Äußerung der Person in der gespeicherten Audiodatei enthalten ist.

Die Auskunftsanfrage kann von jeder Verarbeitungsentität beantwortet werden, wenn dem registrierten Stimmprofil eine passende Verarbeitungserlaubnis zugeordnet ist. Auf diese Weise kann die Person von einer Verarbeitungsentität auch dann eine Kenntnis von einer Verarbeitung ihrer sprachlichen Äußerungen erlangen, wenn sie nicht ein Nutzer der Verarbeitungsentität ist. Infolgedessen ist einer unbeteiligten Person eine Kenntnis einer Verarbeitung ihrer sprachlichen Äußerungen ermöglicht.

In vielen Ausführungsformen wird ein Smartphone oder ein Smartspeaker als das Endgerät betrieben. Das Smartphone und der Smartspeaker sind weit verbreitet und umfassen jeweils zumindest einen Sprachassistenten. Das erfindungsgemäße Verfahren schützt infolgedessen eine Vielzahl von Endgeräten.

Ein weiterer Gegenstand der Erfindung ist ein Computerprogrammprodukt, welches ein von einem Computer lesbares Speichermedium mit einem Programmcode umfasst. Das Speichermedium kann als eine CD, eine DVD, ein USB-Stick, eine Festplatte, ein Speicherchip, ein Cloudspeicher und dergleichen ausgebildet sein.

Erfindungsgemäß veranlasst der Programmcode den Computer, als die Schutzentität oder als die Verarbeitungsentität an einem Verfahren nach einer Ausführungsform der Erfindung mitzuwirken, wenn der Programmcode von einem Prozessor des Computers ausgeführt wird. Die Schutzentität und die Verarbeitungsentität schützen das Endgerät vor einem Steuern durch Unbefugte und/oder Unbeteiligte vor einem unbemerkten und unkontrollierbaren Aushorchen durch das Endgerät.

Ein wesentlicher Vorteil des erfindungsgemäßen Verfahrens besteht darin, dass einerseits ein sprachgesteuertes Endgerät vor einem Steuern durch Unbefugte und andererseits Unbeteiligte vor einem unbemerkten und unkontrollierbaren Aushorchen durch das Endgerät geschützt werden. Ein weiterer Vorteil ist darin zu sehen, dass die benötigten an dem Verfahren beteiligten und dem Endgerät zugeordneten Komponenten, nämlich die Schutzentität und die Verarbeitungsentität, auf eine einfache Weise als eine Software bereitgestellt bzw. aktualisiert werden können.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

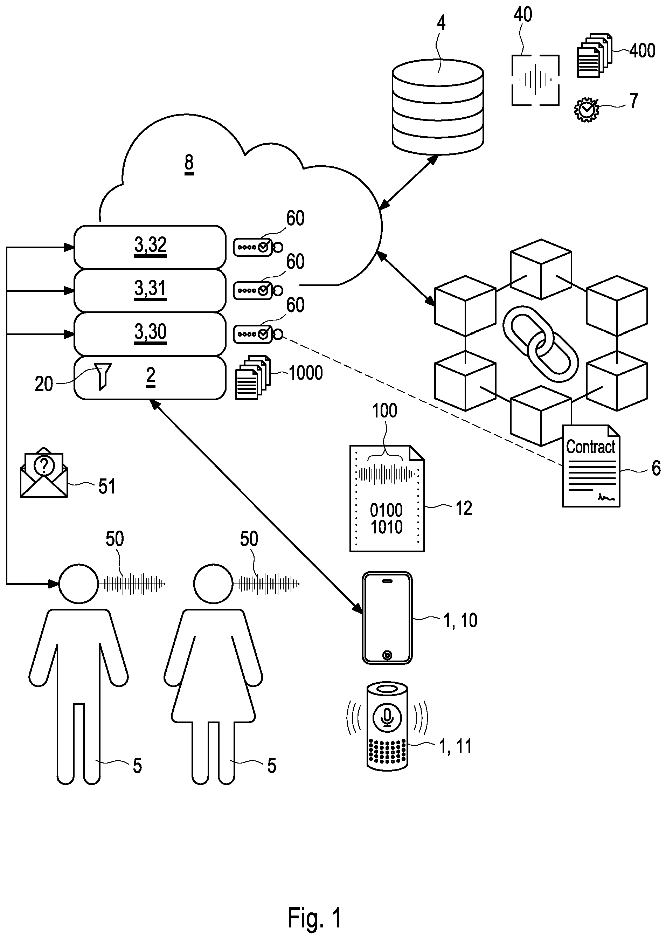

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: eine Schutzentität und eine Verarbeitungsentität für ein Verfahren nach einer Ausführungsform der Erfindung.

Fig. 1 zeigt eine Schutzentität 2 und eine Verarbeitungsentität 3 für ein Verfahren nach einer Ausführungsform der Erfindung. Die Schutzentität 2 und die Verarbeitungsentität 3 können von einem Netzwerkknoten 8, d.h. einer Rechenvorrichtung oder einem Computer, bereitgestellt sein, welcher mittels eines Computerprogrammprodukts nach einer Ausführungsform der Erfindung konfiguriert ist. Die Verarbeitungsentität 3 kann als ein Sprachassistent 30, eine Speicherentität 31 oder Transkriptionsentität 32 ausgebildet sein.

Das Computerprogrammprodukt umfasst ein von einem Computer lesbares Speichermedium mit einem Programmcode. Der Programmcode veranlasst den Computer, als die Schutzentität 2 oder als die Verarbeitungsentität 3 an einem nachfolgend beschriebenen Verfahren nach einer Ausführungsform der Erfindung mitzuwirken, wenn der Programmcode von einem Prozessor des Computers ausgeführt wird.

Das Verfahren dient zum Betreiben eines Endgeräts 1. Insbesondere kann ein Smartphone 10 oder ein Smartspeaker 11 als das Endgerät 1 betrieben werden.

Eine zentrale Stimmprofildatenbank 4 speichert eine Mehrzahl von Stimmprofilen 40 und stellt die Mehrzahl von Stimmprofilen bereit.

Das Endgerät 1 erfasst eine sprachliche Äußerung 50 einer in einer Umgebung des Endgeräts 1 angeordneten Person 5 und stellt eine die sprachliche Äußerung 50 umfassende Audiodatei 12 bereit. Das Endgerät 1 kann auch sprachliche Äußerungen 50 von einer Mehrzahl von in der Umgebung des Endgeräts 1 angeordneten Personen 5 erfassen und eine die sprachlichen Äußerungen der mehreren Personen 5 umfassende Audiodatei 12 bereitstellen. In diesem Fall bestimmt die Schutzentität 2 für jede mittels eines Filtermoduls 20 isolierbare sprachliche Äußerung 50 einer Person 5 einen Abschnitt 100 separat.

Eine dem Endgerät 1 zugeordnete Schutzentität 2 vergleicht einen bestimmten Abschnitt 100 der bereitgestellten Audiodatei 12 mit jedem von einer zentralen Stimmprofildatenbank 4 bereitgestellten Stimmprofil 40. Bevorzugt ermittelt die Schutzentität 2 Metadaten des bestimmten Abschnitts 100 und vergleicht den bestimmten Abschnitt 100 ausschließlich mit von der zentralen Stimmprofildatenbank 4 bereitgestellten Stimmprofilen 40, welchen mit den ermittelten Metadaten 1000 kompatible Metadaten 400 zugeordnet sind.

Wenn die bereitgestellte Audiodatei 12 die sprachlichen Äußerungen der mehreren Personen 5 umfasst, vergleicht die Schutzentität 2 jeden bestimmten Abschnitt 100 mit jedem von einer zentralen Stimmprofildatenbank 4 bereitgestellten Stimmprofil 40.

Die Schutzentität 2 verwirft den verglichenen Abschnitt 100, wenn der verglichene Abschnitt 100 zu keinem bereitgestellten Stimmprofil 40 passt oder einem passenden bereitgestellten Stimmprofil 40 keine Verarbeitungserlaubnis 7 zugeordnet ist. Insbesondere kann die Schutzentität 2 die bereitgestellte Audiodatei 12 verwerfen, wenn ein verglichener Abschnitt zu keinem bereitgestellten Stimmprofil 40 passt oder die bereitgestellte Audiodatei 12 eine nicht isolierbare sprachliche Äußerung 50 einer Person 5 umfasst. Das Verwerfen kann ein unmittelbares Löschen des verglichenen Abschnitts 100 und/oder der bereitgestellten Audiodatei 12 umfassen.

Wenn der verglichene Abschnitt 100 zu einem bereitgestellten Stimmprofil 40 passt und dem passenden bereitgestellten Stimmprofil 40 eine zu einer Verarbeitungsentität 3 passende Verarbeitungserlaubnis 7 zugeordnet ist, übergibt die Schutzentität 2 den verglichenen Abschnitt 100 der Verarbeitungsentität 3. Die Schutzentität 2 übergibt den verglichenen Abschnitt 100 an den Sprachassistenten 30 als die Verarbeitungsentität 3.

Ein Smart Contract 6 kann das in der Stimmprofildatenbank 4 gespeicherte Stimmprofil 40 absichern und dem in der Stimmprofildatenbank 4 gespeicherten Stimmprofil 40 die Verarbeitungserlaubnis 7 zuordnen. Der Smart Contract 6 oder eine Mehrzahl von Smart Contracts 6 kann dem Stimmprofil 40 eine Mehrzahl von Verarbeitungserlaubnissen 7 zuordnen.

Die Verarbeitungsentität 3 verarbeitet den übergebenen Abschnitt 100. Die Verarbeitungsentität 3 verarbeitet den übergebenen Abschnitt 100 insbesondere dann und nur dann, wenn die Person 5 die Verarbeitungsentität 3 und/oder das Verarbeiten mittels eines Tokens 60 des Smart Contracts 6 autorisiert. Die Verarbeitungsentität 3 kann alternativ oder zusätzlich den übergebenen Abschnitt 100 ausschließlich während einer Gültigkeitsdauer des Tokens 6 verarbeiten.

Das Verarbeiten des übergebenen Abschnitts 100 kann ein Speichern des übergebenen Abschnitts 100 und/oder ein Transkribieren des übergebenen Abschnitts 100 umfassen, wenn die Verarbeitungsentität 3 als die Speicherentität 31 bzw. die Transkriptionsentität 32 ausgebildet ist.

Idealerweise speichert die Verarbeitungsentität 3 die übergebene Audiodatei 12 zusammen mit den zu Abschnitten 100 der Audiodatei 12 passenden Stimmprofilen 40 und stellt die gespeicherte Audiodatei 12 für eine Auskunftsanfrage 51 bereit.

### Bezugszeichenliste

- 1: Endgerät
- 10: Smartphone
- 11: Smartspeaker
- 12: Audiodatei
- 100: Abschnitt
- 1000: Metadaten
- 2: Schutzentität
- 20: Filtermodul
- 3: Verarbeitungsentität
- 30: Sprachassistent
- 31: Speicherentität
- 32: Transkriptionsentität
- 4: Stimmprofildatenbank
- 40: Stimmprofil
- 400: Metadaten
- 5: Person
- 50: sprachliche Äußerung
- 51: Auskunftsanfrage
- 6: Smart Contract
- 60: Token
- 7: Verarbeitungserlaubnis
- 8: Netzwerkknoten

## Patentansprüche

1. Verfahren zum Betreiben eines Endgeräts (1), bei dem
- ein Endgerät (1) eine sprachliche Äußerung (50) einer in einer Umgebung des Endgeräts (1) angeordneten Person (5) erfasst und eine die sprachliche Äußerung (50) umfassende Audiodatei (12) bereitstellt;
- eine zentrale Stimmprofildatenbank (4) eine Mehrzahl von Stimmprofilen (40) speichert und bereitstellt;
- eine dem Endgerät (1) zugeordnete Schutzentität (2) einen bestimmten Abschnitt (100) der bereitgestellten Audiodatei (12) mit jedem von einer zentralen Stimmprofildatenbank (4) bereitgestellten Stimmprofil (40) vergleicht;
- die Schutzentität (2) den verglichenen Abschnitt (100) verwirft, wenn der verglichene Abschnitt (100) zu keinem bereitgestellten Stimmprofil (40) passt oder einem passenden bereitgestellten Stimmprofil (40) keine Verarbeitungserlaubnis (7) zugeordnet ist, und die Schutzentität (2) den verglichenen Abschnitt (100) einer Verarbeitungsentität (3) übergibt, wobei die Schutzentität (2) den verglichenen Abschnitt (100) an einen Sprachassistenten (30) als die Verarbeitungsentität (3) übergibt, wenn der verglichene Abschnitt (100) zu einem bereitgestellten Stimmprofil (40) passt und dem passenden bereitgestellten Stimmprofil (40) eine zu der Verarbeitungsentität (3) passende Verarbeitungserlaubnis (7) zugeordnet ist, und die Verarbeitungsentität (3) den übergebenen Abschnitt (100) verarbeitet.

2. Verfahren nach Anspruch 1, bei dem das Verwerfen ein unmittelbares Löschen des verglichenen Abschnitts (100) und/oder der bereitgestellten Audiodatei (12) umfasst.

3. Verfahren nach Anspruch 1 oder 2, bei dem das Verarbeiten des übergebenen Abschnitts (100) ein Speichern des übergebenen Abschnitts (100) und/oder ein Transkribieren des übergebenen Abschnitts (100) umfasst.

4. Verfahren nach einem der Ansprüche 1 bis 3, bei dem ein Smart Contract (6) das in der Stimmprofildatenbank (4) gespeicherte Stimmprofil (40) absichert und dem in der Stimmprofildatenbank (4) gespeicherten Stimmprofil (40) die Verarbeitungserlaubnis (7) zuordnet.

5. Verfahren nach Anspruch 4, bei dem der Smart Contract (6) oder eine Mehrzahl von Smart Contracts (6) dem Stimmprofil (40) eine Mehrzahl von Verarbeitungserlaubnissen (7) zuordnet.

6. Verfahren nach Anspruch 4 oder 5, bei dem die Verarbeitungsentität (3) den übergebenen Abschnitt (100) dann und nur dann verarbeitet, wenn die Person (5) die Verarbeitungsentität (3) und/oder das Verarbeiten mittels eines Tokens (60) des Smart Contracts (6) autorisiert.

7. Verfahren nach Anspruch 6, bei dem die Verarbeitungsentität (3) den übergebenen Abschnitt (100) ausschließlich während einer Gültigkeitsdauer des Tokens (6) verarbeitet.

8. Verfahren nach einem der Ansprüche 1 bis 7, bei dem das Endgerät (1) sprachliche Äußerungen (50) von einer Mehrzahl von in der Umgebung des Endgeräts (1) angeordneten Personen (5) erfasst und eine die sprachlichen Äußerungen der mehreren Personen (5) umfassende Audiodatei (12) bereitstellt, die Schutzentität (2) für jede mittels eines Filtermoduls (20) isolierbare sprachliche Äußerung (50) einer Person (5) einen Abschnitt (100) separat bestimmt und jeden bestimmten Abschnitt (100) mit jedem von einer zentralen Stimmprofildatenbank (4) bereitgestellten Stimmprofil (40) vergleicht.

9. Verfahren nach Anspruch 8, bei dem die Schutzentität (2) die bereitgestellte Audiodatei (12) verwirft, wenn ein verglichener Abschnitt zu keinem bereitgestellten Stimmprofil (40) passt oder die bereitgestellte Audiodatei (12) eine nicht isolierbare sprachliche Äußerung (50) einer Person (5) umfasst.

10. Verfahren nach einem der Ansprüche 1 bis 9, bei dem die Schutzentität (2) Metadaten des bestimmten Abschnitts (100) ermittelt und den bestimmten Abschnitt (100) ausschließlich mit von der zentralen Stimmprofildatenbank (4) bereitgestellten Stimmprofilen (40) vergleicht, welchen mit den ermittelten Metadaten (1000) kompatible Metadaten (400) zugeordnet sind.

11. Verfahren nach einem der Ansprüche 1 bis 10, bei dem die Verarbeitungsentität (3) die übergebene Audiodatei (12) zusammen mit den zu Abschnitten (100) der Audiodatei (12) passenden Stimmprofilen (40) speichert und für eine Auskunftsanfrage (50) bereitstellt.

12. Verfahren nach einem der Ansprüche 1 bis 11, bei dem ein Smartphone (10) oder ein Smartspeaker (11) als das Endgerät (1) betrieben werden.

13. Computerprogrammprodukt, umfassend ein von einem Computer lesbares Speichermedium mit einem Programmcode, welcher den Computer veranlasst, als die Schutzentität (2) oder als die Verarbeitungsentität (3) an einem Verfahren nach einem der Ansprüche 1 bis 12 mitzuwirken, wenn der Programmcode von einem Prozessor des Computers ausgeführt wird.

## Claims

1. A method of operating a terminal (1), in which
- a terminal (1) captures a vocal utterance (50) of a person (5) located in an environment of the terminal (1) and provides an audio file (12) comprising the vocal utterance (50);
- a central voice profile database (4) stores and provides a plurality of voice profiles (40);
- a protective entity (2) assigned to the terminal (1) compares a specific section (100) of the provided audio file (12) with each voice profile (40) provided by a central voice profile database (4);
- the protective entity (2) discards the compared section (100) if the compared section (100) does not match any provided voice profile (40) or no processing permission (7) is assigned to a matching provided voice profile (40), and the protective entity (2) transfers the compared section (100) to a processing entity (3), wherein the protective entity (2) transfers the compared section (100) to a voice assistant (30) as the processing entity (3) if the compared section (100) matches a provided voice profile (40) and a processing permission (7) matching the processing entity (3) is assigned to the matching provided voice profile (40), and the processing entity (3) processes the transferred section (100).

2. The method according to claim 1, in which the discarding comprises an immediate deletion of the compared section (100) and/or the provided audio file (12).

3. The method according to claim 1 or 2, in which processing the transferred section (100) comprises storing the transferred section (100) and/or transcribing the transferred section (100).

4. The method according to any of claims 1 to 3, in which a smart contract (6) secures the voice profile (40) stored in the voice profile database (4) and assigns the processing permission (7) to the voice profile (40) stored in the voice profile database (4).

5. The method according to claim 4, in which the smart contract (6) or a plurality of smart contracts (6) assigns a plurality of processing permissions (7) to the voice profile (40).

6. The method according to claim 4 or 5, in which the processing entity (3) processes the transferred section (100) if and only if the person (5) authorizes the processing entity (3) and/or the processing by means of a token (60) of the smart contract (6).

7. The method according to claim 6, in which the processing entity (3) processes the transferred section (100) exclusively during a validity period of the token (6).

8. The method according to any of claims 1 to 7, in which the terminal (1) captures voice utterances (50) from a plurality of persons (5) located in the environment of the terminal (1) and provides an audio file (12) comprising the voice utterances of the multiple persons (5), the protective entity (2) separately determines a section (100) for each voice utterance (50) of a person (5) that can be isolated by means of a filter module (20) and compares each determined section (100) with each voice profile (40) provided by a central voice profile database (4).

9. The method according to claim 8, in which the protective entity (2) discards the provided audio file (12) if a compared section does not match any provided voice profile (40) or the provided audio file (12) comprises a non-isolatable voice utterance (50) of a person (5).

10. The method according to any of claims 1 to 9, in which the protective entity (2) determines metadata of the determined section (100) and compares the determined section (100) exclusively with voice profiles (40) provided by the central voice profile database (4), to which voice profiles (40) metadata (400) compatible with the determined metadata (1000) are assigned.

11. The method according to any of claims 1 to 10, in which the processing entity (3) stores the transferred audio file (12) together with the voice profiles (40) matching sections (100) of the audio file (12) and provides them for an information request (50).

12. The method according to any of claims 1 to 11, in which a smartphone (10) or a smart speaker (11) is operated as the terminal (1).

13. A computer program product comprising a storage medium readable by a computer and having a program code which causes the computer to participate as the protective entity (2) or as the processing entity (3) in a method according to any of claims 1 to 12 when the program code is executed by a processor of the computer.

## Revendications

1. Procédé pour exploiter un terminal (1), dans lequel
- un terminal (1) enregistre une expression verbale (50) d'une personne (5) située dans l'environnement du terminal (1) et fournit un fichier audio (12) comprenant l'expression verbale (50) ;
- une base de données centrale de profils vocaux (4) stocke et fournit une pluralité de profils vocaux (40) ;
- une entité de protection (2) associée au terminal (1) compare une section (100) spécifique du fichier audio (12) fourni à chaque profil vocal (40) fourni par une base de données centrale de profils vocaux (4) ;
- l'entité de protection (2) rejette la section (100) comparée si la section (100) comparée ne correspond à aucun profil vocal (40) fourni ou si aucune autorisation de traitement (7) n'est attribuée à un profil vocal (40) fourni correspondant, et l'entité de protection (2) transmet la section (100) comparée à une entité de traitement (3), l'entité de protection (2) transmettant la section (100) comparée à un assistant vocal (30) en tant qu'entité de traitement (3) lorsque la section (100) comparée correspond à un profil vocal (40) fourni et qu'une autorisation de traitement (7) correspondant à l'entité de traitement (3) est attribuée au profil vocal (40) fourni correspondant, et l'entité de traitement (3) traite la section (100) transmise.

2. Procédé selon la revendication 1, dans lequel le rejet comprend la suppression immédiate de la section (100) comparée et/ou du fichier audio (12) fourni.

3. Procédé selon la revendication 1 ou 2, dans lequel le traitement de la section (100) transmise comprend le stockage de la section (100) transmise et/ou la transcription de la section (100) transmise.

4. Procédé selon l'une des revendications 1 à 3, dans lequel un contrat intelligent (6) sécurise le profil vocal (40) enregistré dans la base de données de profils vocaux (4) et attribue l'autorisation de traitement (7) au profil vocal (40) enregistré dans la base de données de profils vocaux (4).

5. Procédé selon la revendication 4, dans lequel le contrat intelligent (6) ou une pluralité de contrats intelligents (6) attribue au profil vocal (40) une pluralité d'autorisations de traitement (7).

6. Procédé selon la revendication 4 ou 5, dans lequel l'entité de traitement (3) traite la section (100) transmise si et seulement si la personne (5) autorise l'entité de traitement (3) et/ou le traitement au moyen d'un jeton (60) du contrat intelligent (6).

7. Procédé selon la revendication 6, dans lequel l'entité de traitement (3) traite la section (100) transmise exclusivement pendant une période de validité du jeton (6).

8. Procédé selon l'une des revendications 1 à 7, dans lequel le terminal (1) enregistre les expressions verbales (50) d'une pluralité de personnes (5) situées dans l'environnement du terminal (1) et fournit un fichier audio (12) comprenant les expressions verbales de la pluralité de personnes (5), l'entité de protection (2) détermine séparément une section (100) pour chaque expression vocale (50) d'une personne (5) pouvant être isolée au moyen d'un module de filtrage (20) et compare chaque section (100) déterminée à chaque profil vocal (40) fourni par une base de données centrale de profils vocaux (4).

9. Procédé selon la revendication 8, dans lequel l'entité de protection (2) rejette le fichier audio (12) fourni si une section comparée ne correspond à aucun profil vocal (40) fourni ou si le fichier audio (12) fourni comprend une expression verbale (50) non isolable d'une personne (5).

10. Procédé selon l'une des revendications 1 à 9, dans lequel l'entité de protection (2) détermine les métadonnées de la section (100) déterminée et compare la section (100) déterminée exclusivement à des profils vocaux (40) fournis par la base de données centrale de profils vocaux (4), auxquels sont attribuées des métadonnées (400) compatibles avec les métadonnées (1000) déterminées.

11. Procédé selon l'une des revendications 1 à 10, dans lequel l'entité de traitement (3) enregistre le fichier audio (12) transmis avec les profils vocaux (40) correspondant aux sections (100) du fichier audio (12) et les rend disponibles pour une demande d'informations (50).

12. Procédé selon l'une des revendications 1 à 11, dans lequel un téléphone intelligent (10) ou un haut-parleur intelligent (11) est utilisé en tant que terminal (1).

13. Produit logiciel comprenant un support de stockage lisible par ordinateur ayant un code de programme qui amène l'ordinateur à participer en tant qu'entité de protection (2) ou en tant qu'entité de traitement (3) à un procédé selon l'une des revendications 1 à 12 lorsque le code de programme est exécuté par un processeur de l'ordinateur.
